# EUROPÄISCHE PATENTSCHRIFT

(11) **EP 3 513 891 B1**
(45) Veröffentlichungstag und Bekanntmachung des Hinweises auf die Patenterteilung: **04.09.2024**
(21) Anmeldenummer: 19152551.8
(22) Anmeldetag: 18.01.2019
(51) Int. Cl.: B23B 31/00, B23B 31/08, B23B 31/107, B23B 31/14

(54) **SPANNFUTTER FÜR DEN SCHNELLEN WERKZEUGWECHSEL**
CHUCK FOR RAPID TOOL CHANGE
MANDRIN POUR LE CHANGEMENT RAPIDE D'OUTIL

(30) Priorität: 19.01.2018 DE 202018100313 U
(43) Veröffentlichungstag der Anmeldung: 24.07.2019
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: Porath, Rainer, 90562 Heroldsberg (DE)
(74) Vertreter: Schröer, Gernot H.

(56) Entgegenhaltungen:
- WO-A2-97/31740
- DE-U1- 202018 100 052
- JP-A- S5 639 845
- US-A- 3 467 404
- US-A- 885 392

## Beschreibung

Die Erfindung betrifft ein Spannfutter, gemäß dem Oberbegriff des Patentanspruchs 1, zur Einspannung eines Werkzeugs, insbesondere eines Gewindeschneidwerkzeugs. Ein derartiges Spannfutter geht beispielsweise aus der JP S56 39845 A hervor.

Die Druckschrift DE 20 2010 006 261 U1 beschreibt ein Spannfutter zur Aufnahme unterschiedlicher Zerspanungswerkzeuge, insbesondere für Gewindebohrer für synchrones Gewindeschneiden, umfassend einen Halter mit einer Werkzeugaufnahme und Mittel zur Befestigung, Fixierung und zur Verdrehsicherung eines Werkzeugs sowie zum Ausgleich des Synchronisationsfehlers einer Bearbeitungsmaschine. Das Spannfutter weist dabei einen Halter mit einer Aufnahme für eine Direkteinspannung oder für einen Schnellwechseleinsatz für einen Gewindebohrer auf, wobei das Spannfutter und der Halter eine in Längsrichtung durchgehende Querbohrung aufweisen, in der ein Ausgleichselement kraftschlüssig so gehalten ist, dass mittels mindestens eines Federelements ein axialer und radialer Ausgleich des Halters erfolgt und wobei der Halter Mittel zum Schnellspannen des Gewindebohrers aufweist. Die Mittel zum Schnellspannen werden in dieser Druckschrift allerdings nicht näher beschrieben.

Ferner ist die Druckschrift DE 20 2009 009 010 U1 bekannt, die ein Schnell-Spannfutter für ein Bohrwerkzeug offenbart, wobei das Bohrwerkzeug einen Schaft mit einer Schaft-Aussparung mit planarer Spannfläche aufweist, der Schaft also als sogenannter Weldon-Schaft ausgebildet ist. Ferner weist das Spannfutter in einem Stirnseiten-nahen Bereich eine Aussparung mit Wandungsdurchbruch auf, in welcher ein Bohrwerkzeug-Verriegelungs-Element angeordnet ist. Dieses ist innerhalb der Aussparung in Richtung zu einer Rotationsachse des Werkzeugs hin und entgegengesetzt verschiebbar. In offener Position des Spannfutters ist das Bohrwerkzeug-Verriegelungs-Element in der Aussparung so angeordnet, dass es nicht in die Bohrwerkzeug-Aussparung hineinragt. In geschlossener Position des Spannfutters ragt das Bohrwerkzeug-Verriegelungs-Element verriegelnd in die Bohrwerkzeug-Aussparung hinein. Beim Einführen des Werkzeugschaftes wird das Bohrwerkzeug-Verriegelungs-Element in Richtung der Rotationsachse gedrückt, bis sein vorderes Teil verriegelnd in die Bohrwerkzeug-Aussparung eingreift.

Ein derartiges Schnellspannfutter kann allerdings nur mit Werkzeugen mit planarer Spannfläche verwendet werden.

Ein weiteres Spannfutter ist aus der Druckschrift DE 201 07 998 U1 bekannt, welches eine Befestigungseinrichtung aufweist, die als radial in Richtung einer entsprechenden Mitnahmefläche eines Werkzeugs verlagerbare, durch eine Ausnehmung der Aufnahme fassende Spanneinrichtung mit einer dem Schaft zugewandten Spannfläche ausgebildet ist, wobei die Spanneinrichtung mittels einer in die Befestigungseinrichtung integrierten Betätigungseinrichtung mit der Mitnahmefläche in Kontakt bringbar und in dieser Position fixierbar ist, wobei jede Spannfläche in etwa den Abmessungen der entsprechenden Mitnahmefläche des Schaftes angepasst ist und wobei die Verlagerung der Spanneinrichtung durch Verdrehen der als ein in Bezug auf die Mittelachse des Spannfutters in etwa rotationssymmetrischer Drehring ausgebildeten Betätigungseinrichtung um die Mittelachse des Spannfutters erzielbar ist.

Ein solches Spannfutter weist allerdings eine komplexe Mechanik auf und ist daher nur schwierig herzustellen.

Außerdem ist aus der Druckschrift DE 197 25 950 A1 ein Gewindeschneidfutter für sogenanntes "Rigid Tapping" bekannt, bei dem zwischen einem Futterschaft und einer in dem Futterschaft gehalterten Spannzange ein Spannzangenaufnahmeteil zwischengeordnet ist, das in Drehrichtung spielfrei im Futterschaft gehaltert ist und in axialer Richtung in Zu- und Druckrichtung abgefedert ist.

Mit einem solchen Spannfutter ist allerdings kein schneller Werkzeugwechsel möglich.

Ferner werden unter der Bezeichnung "Softsynchro" von der Anmelderin Spannzangenaufnahmen vertrieben, die in der Praxis beim "Rigid Tapping" auftretende Synchronisationsfehler ausgleichen. Derartige Synchronisationsfehler treten bei der Synchronisation zwischen der Drehbewegung der Spindel der Werkzeugmaschine und der Werkzeugbewegung entlang der Vorschubachse auf, beispielsweise wenn Spindel- und Linearantriebe zusammenwirken müssen und nicht ausreichend synchronisiert werden können. Zum Ausgleich dieser Synchronisationsfehler ist es bekannt, ein Dämpfungsglied zwischen Spindel und dem Gewindebohrer oder Gewindefurcher vorzusehen und dadurch Steigungsdifferenzen zwischen Gewindewerkzeug und Spindel auszugleichen.

Der vorliegenden Erfindung liegt die Aufgabe zugrunde, ein Spannfutter bereitzustellen, das einen schnellen Werkzeugwechsel ermöglicht und die Nachteile des Standes der Technik vermeidet.

Diese Aufgabe wird gelöst durch ein Spannfutter zur Einspannung eines Werkzeugs, insbesondere eines spanenden Werkzeugs, vorzugsweise eines Gewindeschneidwerkzeugs, mit den Merkmalen des unabhängigen Patentanspruchs.

Ein erfindungsgemäßes Spannfutter definiert eine Längsachse sowie auf die Längsachse bezogene radiale Achsen und weist einen Futterkörper zur Aufnahme und Fixierung des Werkzeugs in dem Spannfutter auf, wobei der Futterkörper einen Innenraum aufweist, in den das Werkzeug einsteckbar ist und wobei an dem Futterkörper eine Fixiereinrichtung angeordnet ist, mit der ein eingesteckte Werkzeug in dem Futterkörper fixiert werden kann.

Die Fixiereinrichtung umfasst ein Fixierelement, das zwischen einer Fixierstellung, in der ein eingestecktes Werkzeug von dem Fixierelement zumindest in axialer Richtung fixiert ist und einer Offenstellung, in der ein Werkzeug in axialer Richtung in den Futterkörper eingesteckt oder aus dem Futterkörper entfernt werden kann, hin und her bewegbar ist, wobei das Fixierelement so an dem Futterkörper angeordnet ist, dass bei einer Rotation des Futterkörpers um die Längsachse eine Fliehkraft auftritt, die das Fixierelement in die Fixierstellung drückt oder drängt, Zusätzlich wird die technische Aufgabe gelöst, indem bei dem Spannfutter die Fixiereinrichtung ein Fixierelement mit einer Durchgangsöffnung aufweist, wobei das Fixierelement in dem Innenraum des Futterkörpers so angeordnet ist, dass die Längsachse durch die Durchgangsöffnung hindurch verläuft und ein in den Futterkörper eingestecktes und sich durch die Durchgangsöffnung hindurch erstreckendes Werkzeug mittels einer Verschiebung des Fixierelements fixiert werden kann.

Indem bei einer Rotation des Futterkörpers, also bei Betrieb des Spannfutters, eine Fliehkraft auf das Fixierelement wirkt und dieses in die Fixierstellung drückt oder drängt, ist eine Sicherung gegen unabsichtliches Lösen der Fixiereinrichtung während des Betriebs geschaffen. Die Fixierkraft, die auf das Werkzeug wirkt ist im Betrieb gegenüber der Fixierkraft bei einem Spannfutter in Ruhe, stets erhöht. Außerdem steigt die Fliehkraft bei steigender Drehzahl, so dass das Werkzeug bei steigender Drehzahl mit zunehmender Fixierkraft gesichert wird. Die Fixiereinrichtung ist auf diese Weise als sich selbst sichernde Fixiereinrichtung ausgebildet.

Zudem wird ein Spannfutter mit einer Fixiereinrichtung geschaffen, die in einfacher Weise mit dem Werkzeug in Eingriff gebracht werden kann. Die Stabilität des Futterkörpers wird nicht beeinträchtigt und der Rundlauf des Spannfutters bleibt gewährleistet.

In einer vorteilhaften Weiterbildung der Erfindung weist das Fixierelement einen Massenmittelpunkt und/oder einen geometrischen Schwerpunkt auf, der zumindest in der Fixierstellung nicht auf der Längsachse angeordnet ist oder der zu der Längsachse beabstandet ist.

Auf diese Weise ist das Fixierelement relativ zu Rotationsachse gezielt so angeordnet, dass im Betrieb, bezogen auf die Gesamtmasse des Fixierelements verhältnismäßig hohe Fliehkräfte auf das Fixierelement wirken können, was zu einer vorteilhaft hohen Fixierkraft in der Fixierstellung führt.

In einer weiteren vorteilhaften Ausführungsform weist das Fixierelement zumindest in der Fixierstellung eine exzentrische Massenverteilung bezogen auf die Längsachse auf.

Eine exzentrische Massenverteilung kann insbesondere durch die geometrische Gestaltung des Fixierelements erreicht werden. Zudem ist es möglich, beispielsweis durch eine entsprechende Dichteverteilung des Materials des Fixierelements eine exzentrische Massenverteilung zu erreichen. Darunter kann auch verstanden werden, dass das Fixierelement beispielsweise zwei Materialien mit unterschiedlicher Dicht umfasst, die so angeordnet sind, dass eine exzentrische Masseverteilung erreicht wird.

In einer vorteilhaften Ausgestaltung der Erfindung ist das Fixierelement und/oder die Durchgangsöffnung wahlweise in einer Fixierstellung zur Fixierung des Werkzeugs oder in einer Offenstellung zur Einführung und/oder Entnahme des Werkzeugs anordenbar oder angeordnet.

Durch einfache Gestaltung des Fixierelements mit nur zwei möglichen Konfiguration kann das Werkzeug in dem Futterkörper in vorteilhafter Weise fixiert werden. Ebenso vorteilhaft kann das Werkzeug in den Futterkörper eingeführt oder entnommen werden.

In einer weiteren vorteilhaften Ausführungsform der Erfindung ist das Fixierelement und/oder die Durchgangsöffnung zwischen Fixierstellung und Offenstellung hin und her bewegbar oder wird bewegt.

Auf diese Weise sind in klar definierter Weise eine Konfiguration des Fixierelements zur Fixierstellung und eine Konfiguration zur Offenstellung festgelegt. Dadurch ist in vorteilhaft einfacher Weise die Fixiereinrichtung definiert.

Eine weitere vorteilhafte Ausgestaltung der Erfindung umfasst, dass das Fixierelement unmittelbar manuell oder von Hand betätigbar und manuell oder von Hand zwischen Fixierstellung und Offenstellung hin und her bewegbar ist.

Somit ist das Fixierelement von außen für die Hand eines Bedieners zugänglich. Die Rüstung des Spannfutters kann somit ohne Rüstwerkzeug durchgeführt werden.

Ferner kann es vorteilhaft sein, wenn das Fixierelement quer zur Längsachse und/oder entlang einer radialen Achse, insbesondere hin und her und/oder linear, bewegbar ist oder bewegt wird.

Ist das Fixierelement entlang einer radialen Achse bewegbar können sehr einfache Führungen für das Fixierelement verwendet werden. Eine lineare Bewegung des Fixierelements erlaubt eine sehr kurze Bewegung zur Fixierung des Werkzeugs, wodurch zugleich eine sehr schnelle Fixierung möglich wird. Bewegung quer zu Längsachse erlaubt eine schnelle und einfache Klemmung des Werkzeugs zwischen Fixierelement und Werkzeugschaft einerseits und Werkzeugschaft und einer Wandung des Futterkörpers andererseits.

Eine weitere vorteilhafte Ausführungsform umfasst, dass die Fixiereinrichtung einen Aktuator, insbesondere eine Druckfeder, aufweist, der das Fixierelement in einer Richtung, insbesondere in einer seiner Bewegungsrichtungen entlang der radialen Achse, mit einer Aktuatorkraft, vorzugsweise einer Aktuator-Druckkraft oder Federkraft, beaufschlagt, vorzugsweise so, dass das Fixierelement permanent in die Fixierstellung gedrückt wird und/oder gegen einen sich durch die Durchgangsöffnung erstreckenden Werkzeugschaft gedrückt wird.

Somit kann in einer Fixierstellung dauerhaft mittels eines Aktuator eine Druckkraft oder Klemmkraft auf einen Werkzeugschaft ausgeübt werden. Diese Druckkraft kann dennoch manuell überwunden werden, so dass ein Lösen des Werkzeugs manuell möglich bleibt.

Vorteilhaft ist es ferner, wenn eine Richtung der auf das Fixierelement wirkenden Fliehkraft und eine Richtung der durch den Aktuator auf das Fixierelement wirkenden Aktuatorkraft, und insbesondere mit der Richtung einer radialen Achse, übereinstimmen, insbesondere so, dass sich der Betrag der Fliehkraft und der Betrag der Aktuatorkraft bezogen auf diese Richtung aufaddieren, so dass Fliehkraft und Druckkraft gemeinsam zu einer Fixierung des Fixierelements in der Fixierstellung beitragen.

Indem beide auf das Fixierelement wirkende Kräfte in dieselbe Richtung wirken, wird das Fixierelement in vorteilhafter Weise im Betrieb mit einer Gesamtfixierkraft in die Fixierstellung gedrückt oder gedrängt, wodurch eine sehr sichere Fixierung des Werkzeugs geschaffen ist.

In einer weiteren vorteilhaften Ausgestaltung der Erfindung weist die Fixiervorrichtung einen, insbesondere als Gewindestift oder Spiralspannstift ausgebildeten, Sicherungsstift weist, der in einer Bohrung an dem Futterkörper aufgenommen ist und in eine Sicherungsaussparung an dem Fixierelement ragt, wobei die Sicherungsaussparung eine Längserstreckung entlang der Bewegungsrichtungen, insbesondere entlang der radialen Achse des Fixierelements aufweist, die gestattet, dass das Fixierelement entlang der Bewegungsrichtungen hin und her bewegbar ist und dabei einen Anschlag für die Hin-Bewegung und/oder die Her-Bewegung des Fixierelements ausbildet.

Der Anschlag wird insbesondere von Wandungen gebildet, die die Sicherungsaussparung begrenzen oder einfassen. Die Sicherungsaussparung erlaubt in besonders vorteilhafter Weise eine Begrenzung, beziehungsweise Sicherung der Bewegung des Fixierelements, insbesondere eine Herausfallsicherung. Zudem kann mit der Sicherungsaussparung und dem Sicherungsstift das Ausmaß der Bewegbarkeit des Fixierelements in einfacher Weise eingestellt werden.

In einer vorteilhaften Weiterbildung der Erfindung ist der Sicherungsstift in seiner Längserstreckung entlang einer zweiten radialen Achse angeordnet, die in einem Winkel, insbesondere quer oder orthogonal oder rechtwinklig, zu einer ersten radialen Achse angeordnet ist.

Auf diese Weise kann der Sicherungsstift platzsparend an dem Futterkörper montiert werden. Zudem kann der Zusammenbau einfach erfolgen und die gewünschte Blockierfunktion des Sicherungsstifts gegenüber dem Fixierelement kann in einfacher Weise sichergestellt werden.

Es ist ferner vorteilhaft, wenn die Durchgangsöffnung eine symmetrische Durchgangsöffnung, insbesondere eine ellipsenförmige Durchgangsöffnung ist.

Eine nicht erfindungsgemäße kreisförmige Durchgangsöffnung ist in einfacher Weise herstellbar. Eine ellipsenförmige Durchgangsöffnung ermöglicht eine an den Werkzeugschaft, insbesondere eine an den Durchmesser des Werkzeugschafts angepasste Geometrie der Durchgangsöffnung. Eine ausreichend lange Anlagekante oder Anlagefläche des Fixierelements an dem Werkzeugschaft wird so erreicht.

Alternativ dazu kann es vorteilhaft sein, wenn die Durchgangsöffnung eine asymmetrische oder exzentrische Durchgangsöffnung ist, insbesondere eine ovalartige Durchgangsöffnung oder eine Durchgangsöffnung die, vorzugsweise teilweise, eine Trapezform beschreibt. Mit einer solchen Durchgangsöffnung kann eine ausreichend lange Anlagekante oder Anlagefläche des Fixierelements an dem Werkzeugschaft erreicht werden, wobei zugleich der notwendige Weg des Fixierelement aus der Fixierstellung in die OffenStellung relativ kurz sein kann. Dadurch kann eine kompakte Bauweise der Fixiereinrichtung und des Aufnahmekörpers erreicht werden. Ovalartige, beziehungsweise teilweise trapezförmige Durchgangöffnungen können bei bestimmten Anwendungsfällen ebenfalls vorteilhaft sein.

Nicht erfindungsgemäße schlüssellochförmige Durchgangsöffnungen erlauben eine verhältnismäßig große Anlagefläche oder Anlagekante oder Klemmfläche zwischen Fixierelement und Werkzeugschaft. Auch kann eine Offenstellung des Fixierelements, die ein Entnehmen des Werkzeugs erlaubt, mit einer Durchgangsöffnung schlüssellochförmiger Gestalt mit einem verhältnismäßig kurzen Verschiebeweg des Fixierelements realisiert werden. Ovalartige oder trapezförmige Durchgangsöffnungen weisen bei bestimmten Anwendungen ebenfalls Vorteile auf.

Bei einer vorteilhaften Weiterbildung der Erfindung weist die ovalartige Durchgangsöffnung eine Kontur mit wenigstens einem ersten Konturabschnitt und einem weiteren Konturabschnitt auf, wobei der erste Konturabschnitt ein spitzes Ende und der weitere Konturabschnitt ein stumpfes Ende der ovalartigen Durchgangsöffnung ausbilden und wobei die ovalartige Durchgangsöffnung so in dem Fixierelement orientiert angeordnet ist, dass bei einer Bewegung des Fixierelements in die Fixierstellung das stumpfe Ende von der Längsachse weg bewegt und das spitze Ende auf die Längsachse zu bewegt wird und/oder dass bei einer Bewegung des Fixierelements in die Offenstellung das stumpfe Ende auf die Längsachse zu bewegt und das spitze Ende von der Längsachse weg bewegt wird.

Auf diese Weise ist in einer Fixierstellung eine verhältnismäßig große Klemmfläche zwischen Werkzeugschaft und Fixierelement zur Verfügung gestellt. Zugleich wird die Offenstellung bereits nach einem verhältnismäßig kurzen Verschieben des Fixierelements erreicht, da das stumpfe Ende des Ovals einen verhältnismäßig großen Durchgangsquerschnitt bietet, der zentral zur Längsachse hin verschoben werden kann, so dass nach dem Verschieben ein Gesamt-Öffnungsquerschnitt zentral zur Längsachse positioniert ist, der eine Entnahme des Werkzeugs erlaubt.

In einer weiteren nicht erfindungsgemäßen Ausgestaltung weist die schlüssellochförmige Durchgangsöffnung eine Kontur mit wenigstens einem ersten Konturabschnitt und einem zweiten Konturabschnitt auf, wobei bezogen auf eine radiale Achse die quer zur einer Bewegungsrichtung des Fixierelements orientiert ist, der erste Konturabschnitt eine erste Weite, insbesondere eine anliegende Öffnungsweite, der Durchgangsöffnung definiert und der zweite Konturabschnitt eine zweite Weite, insbesondere eine maximale Öffnungsweite definiert, wobei die anliegende Öffnungsweite geringer ist als die maximale Öffnungsweite, insbesondere wobei der erste Konturabschnitt auf der dem Aktuator zugewandten Seite des Fixierelements angeordnet ist und insbesondere wobei der erste Konturabschnitt einer Teil-Kreisform entspricht, die einen Radius aufweist, der einem Radius eines in dem Futterkörper angeordneten zylinderförmigen Werkzeugschaftes, vorzugsweise im Bereich einer an dem Werkzeugschaft vorgesehenen Aussparung, entspricht.

Auf diese Weise ist eine Durchgangsöffnung geschaffen ist besonders vorteilhaft auf zylinderförmige Werkzeugschäfte abgestimmt ist. Zudem können Toleranzen der Abmaße der Werkzeugschäfte bis zu einem gewissen Grad ausgeglichen werden.

In einer weiteren vorteilhaften Ausgestaltung der Erfindung ist ein Werkzeug in dem Futterkörper fixiert, wobei das Werkzeug einen im Wesentlichen zylinderstabförmigen Werkzeugschaft, der eine in Umfangsrichtung vollständig umlaufende Aussparung, insbesondere mit einer zum Schaft konzentrischen Aussparungswand, aufweist, wobei das Fixierelement in Fixierstellung in die Aussparung eingreift, vorzugsweise wobei die Aussparungswand der Aussparung in dem spitzen Ende der ovalförmigen Durchgangsöffnung mit dem Fixierelement in Anlage ist oder vorzugsweise wobei die Aussparungswand der Aussparung mit der schlüssellochförmigen Durchgangsöffnung im Bereich des ersten Konturabschnitts anliegt.

Eine vollständig umlaufende Aussparung an einem Werkzeugschaft ist vorteilhaft, da das Werkzeug unabhängig von seiner Stellung in Drehrichtung in dem Aufnahmeraum festgelegt werden kann. Zudem entsteht durch das in die Aussparung eingreifende Fixierelement ein Formschluss in axialer Richtung sowohl in Vorschubrichtung als auch in Ausziehrichtung des Werkzeugs.

Darüber hinaus kann es vorteilhaft sein, wenn das Spannfutter einen Schaftkörper zur Ankopplung des Spannfutters an eine Werkzeugmaschine umfasst, wobei der Futterkörper drehfest und mit axialem Spiel mit dem Schaftkörper verbunden ist und wobei zwischen Schaftkörper und Futterkörper wenigstens ein Übergaberohr, insbesondere konzentrisch zu Schaftkörper und Futterkörper eine Kompensationsvorrichtung, insbesondere umfassend ein oder mehrere Kompensationselement(e) und/oder ein oder mehrere Halteelement(e), angeordnet ist, die dazu vorgesehen ist im Betrieb des Spannfutters auftretende axiale Kräfte in Richtung der Längsachse zumindest teilweise aufzunehmen oder zu dämpfen.

Auf diese Weise ist das Spannfutter mit einer Axialkraftkompensation versehen, wodurch Synchronisationsfehler ausgeglichen werden können. Die Einspannung des Werkzeugs mittels der Fixiereinrichtung fixiert das Werkzeug unabhängig von der Kompensation der auftretenden Axialkräfte, so dass die Axialkraftkompensation nicht von der Fixierung des Werkzeugs beeinflusst wird.

In einer weiteren vorteilhaften Ausgestaltung der Erfindung bilden das Spannfutter, insbesondere der Schaftkörper und/oder das Übergaberohr und/oder der Futterkörper und/oder das Werkzeug wenigstens einen Kanal zur spannfutterinternen Zuführung von Kühl- und/oder Schmierstoff an Kühl- und/oder Schmierstoff-Abgabeöffnungen des Werkzeugs ausbilden.

Auf diese Weise kann eine interne Kühlschmiermittelzufuhr, kurz IKZ, an dem Spannfutter realisiert werden, ohne dass die Werkzeugfixierung weitere Maßnahmen zur Bereitstellung von Kühlschmiermittel im Werkzeugschneidenbereich notwendig macht.

In den Zeichnungen ist ein Ausführungsbeispiel der Erfindung dargestellt. Es zeigen:
- FIG 1: in einer Schnittdarstellung ein erfindungsgemäßes Spannfutter;
- FIG 2: in einer Schnittdarstellung das erfindungsgemäße Spannfutter, wobei die Ansicht in Drehrichtung des Werkzeugs um 90° gedreht ist;
- FIG 3a: eine Schnittansicht des erfindungsgemäßen Spannfutters gemäß dem in FIG 2 gekennzeichneten Schnitt III-III;
- FIG 3b: eine Ansicht des Fixierelements des Spannfutters gemäß FIG 3a in isolierter Darstellung als erste Ausführungsform;
- FIG 4a: eine Schnittansicht gemäß dem in FIG 2 gekennzeichneten Schnitt III-III eines Spannfutters in einer nicht erfindungsgemäßen zweiten alternativen Ausführungsform;
- FIG 4b: eine Ansicht des Fixierelements des Spannfutters gemäß FIG 4a in isolierter Darstellung;
- FIG 5a: eine Schnittansicht gemäß dem in FIG 2 gekennzeichneten Schnitt III-III eines erfindungsgemäßen Spannfutters in einer dritten alternativen Ausführungsform;
- FIG 5b: eine Ansicht des Fixierelements des Spannfutters gemäß FIG 5a in isolierter Darstellung;
- FIG 6a: eine Schnittansicht gemäß dem in FIG 2 gekennzeichneten Schnitt III-III eines Spannfutters in einer nicht erfindungsgemäßen vierten alternativen Ausführungsform;
- FIG 6b: eine Ansicht des Fixierelements des Spannfutters gemäß FIG 6a in isolierter Darstellung;
- FIG 7a: eine Schnittansicht gemäß dem in FIG 2 gekennzeichneten Schnitt III-III eines erfindungsgemäßen Spannfutters in einer fünften alternativen Ausführungsform;
- FIG 7b: eine Ansicht des Fixierelements des Spannfutters gemäß FIG 7a in isolierter Darstellung;

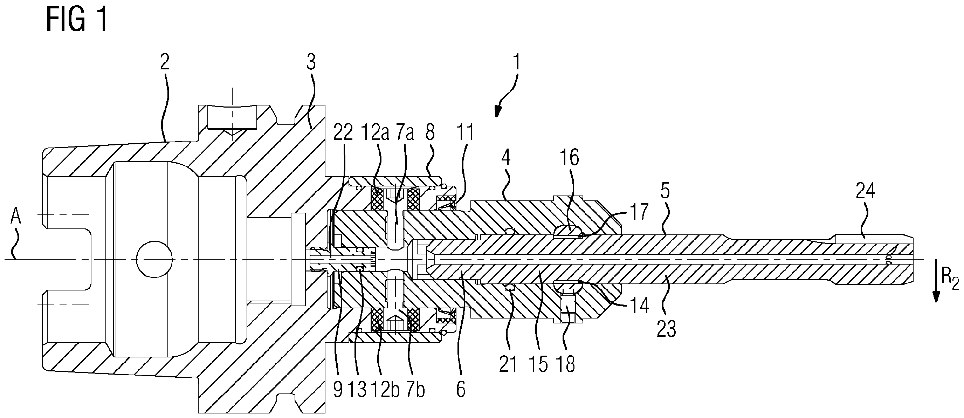

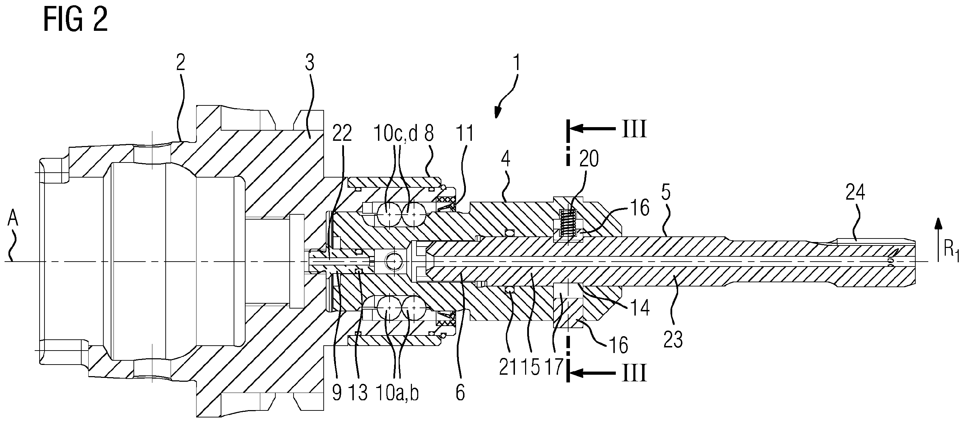

FIG 1 und FIG 2 zeigen ein Werkzeugspannfutter 1 mit einem Futterschaft 2 zur Ankoppelung des Werkzeugspannfutters 1 an eine Werkzeugmaschine. Das Werkzeugspannfutter 1 umfasst einen Schaftkörper 3 in dem ein Futterkörper 4 gehaltert ist, wobei der Futterkörper 4 zur Aufnahme und Halterung eines Werkzeugs 5, beispielsweise eines Gewindeerzeugungswerkzeuges vorgesehen ist.

Schaftkörper 3, Futterkörper 4 und Werkzeug 5 sind im Wesentlichen um die Längsachse A rotationssymmetrisch ausgebildet, wobei Abweichungen von der Rotationssymmetrie möglich sind. Ausgehend von der Längsachse A sind radiale Achsen R₁, R₂ definiert. Die Längsachse A entspricht dabei der Rotationsachse des Werkzeugs, wie auch des Spannfutters 1. Einige Abweichungen werden aus einem Vergleich zwischen FIG 1 und FIG 2 ersichtlich.

Das in dem Futterkörper 4 eingesteckte und angeordnete Werkzeug 5 weist an seinem Schaft 15 einen Vierkantbereich 6 auf, der in einer korrespondierenden Vierkantaufnahme in dem Futterkörper 4 aufgenommen ist. Dadurch ist das Werkzeug 5 drehfest in dem Futterkörper 4 gehalten. Eine Werkzeugaufnahmedichtung 21 dichtet zwischen Werkzeugschaft 15 und Futterkörper 4 einen den Kanal 22 für die Kühlschmierstoffzuführung bildenden Innenraum des Futterkörpers 4 gegenüber der Umgebung ab. Der Werkzeugschaft 15 weist an dem Vierkantbereich 6 anschließend einen zylinderstabförmigen Schaftbereich 23 auf, der wiederum in einen Schneidenbereich 24 des Werkzeugs 5 übergeht.

Der Futterkörper 4 kann innerhalb des Schaftkörpers 3 in axialer Richtung, also in Richtung der Längsachse A beweglich sein, so dass im Bearbeitungsprozess in axialer Richtung auftretende Kräfte kompensiert werden können. Zu diesem Zweck sind Halteelemente 7a, 7b vorgesehen, die den Futterkörper 4 mit dem Schaftkörper 3 verbinden. Beispielsweise können die Halteelemente 7a, 7b als Schrauben vorgesehen sein, die in entsprechenden Gewindebohrungen des Futterkörpers 4 verschraubt sind. Die Halteelemente 7a, 7b weisen zudem einen Kopf, beispielsweise einen Schraubenkopf auf, der in einer Öffnung des Schaftkörpers 3 angeordnet ist. Kompensationselemente 12a, 12b sind als ringförmige Kissen um die Köpfe der Halteelemente 7a, 7b angeordnet und werden von den Halteelementen 7a, 7b in Position gehalten. Die Kompensationselemente 12a, 12b können dabei aus Kunststoff und/oder elastisch ausgebildet sein und eine Dämpfung einer axialen Bewegung des Futterkörpers 4 gegenüber dem Schaftkörper 3 ermöglichen. Die axial auftretenden Kräfte sind dadurch von den auftretenden Drehmomenten entkoppelt, wodurch Kraftspitzen der axial auftretenden Kräfte in vorteilhafter Weise reduziert werden können. Eine Abdeckhülse 8 verdeckt und schützt die Halteelemente 7a, 7b und die Kompensationselemente 12a, 12b gegenüber der Umgebung.

Ferner sind Kugeln an einem Außenumfang des Futterkörpers 4 angeordnet, die Drehmomentmitnehmer 10a,...,10d bilden. Die Drehmomentmitnehmer 10 sind an dem Futterkörper 4 radial außen und an einem Sitz des Schaftkörpers 3 radial innen anliegend gelagert. Diese Drehmomentmitnehmer 10 ermöglichen eine im Wesentlichen spielfreie Drehmomentmitnahme in Rotationsrichtung des Werkzeugs 5, d.h. eine unmittelbare und starre Übertragung eines Drehmoments von dem Schaftkörper 3 auf den Futterkörper 4. Zugleich erlauben die Drehmomentmitnehmer 10 in axialer Richtung ein zumindest geringfügiges Spiel zwischen Futterkörper 4 und Schaftkörper 3 und dienen als Führung des Futterkörpers 4 an dem Schaftkörper 3 in axialer Richtung. Ein Passring 11 bildet eine Dichtung zwischen Futterkörper 4 und Schaftkörper 3 und gewährleistet einen stabilen Sitz des Futterkörpers 4 in dem Schaftkörper 3.

Ein Übergaberohr 9 ist ferner konzentrisch zu dem Schaftkörper 3 und dem Futterkörper 4 sowie zwischen diesen angeordnet, wobei Endabschnitte eines Kanals 22 des Übergaberohrs 9 einerseits in dem Schaftkörper 3 und andererseits in dem Futterkörper 4 aufgenommen sind. An dem Übergaberohr 9 ist ein als O-Ring-Dichtung vorgesehenes Dichtelement 13 angeordnet, welches die Anlagefuge zwischen dem Übergaberohr 9 und dem Futterkörper 4 fluidisch abdichtet.

Neben dem Übergaberohr 9 können auch Schaftkörper 3, Futterkörper 4 sowie das Werkzeug 5 Leitungsabschnitte aufweisen, die zusammenwirkend einen durchgehenden Kanal 22 für die Beaufschlagung des Werkzeugs mit Kühlschmiermittel, insbesondere in Form einer sogenannten inneren Kühlschmierstoffzufuhr (IKZ), bilden. Das Spannfutter 1 kann auch alternativ für die Minimalmengenschmierung modifiziert werden, beispielsweise indem anstelle des Übergaberohrs 9 ein angefedertes Rohr verwendet wird.

In dem zylinderstabförmigen Schaftbereich 23 des Werkzeugs 5 weist der Werkzeugschaft 15 eine in Umfangsrichtung vollständig umlaufende Aussparung 14 oder auch Einschnürung auf, die der Schnellarretierung des Werkzeugs 5 dient. Bei eingestecktem Werkzeug 5 ist benachbart zu der Aussparung 14 eine Schnellarretiervorrichtung positioniert, die an dem Futterkörper 4 angeordnet ist. Die Aussparung 14 weist eine zum Schaft 15 konzentrische Aussparungswand auf. Ferner bildet die Aussparung an dem Schaft 15 stufenartige Absätze.

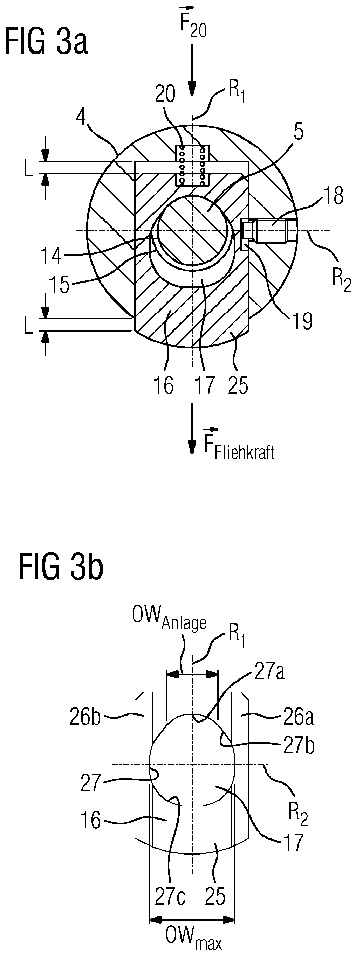

FIG 3a zeigt die Schnellarretiervorrichtung, welche ein Fixierelement 16 aufweist, das als beweglicher, platten- oder blockförmiger Schieber ausgebildet ist. Das Fixierelement 16 ist in dem Futterkörper 4 entlang der radialen Achse R₁ hin und her beweglich angeordnet und weist eine Durchgangsöffnung 17 auf.

Die Beweglichkeit des Fixierelements 16 entlang von R₁ wird dabei durch einen Sicherungsstift 18 begrenzt, der in einer entsprechenden Bohrung in dem Futterkörper 4 angeordnet und befestigt ist und in eine Sicherungsaussparung 19 entlang einer radialen Achse R₂ hineinragt, die an einer dem Sicherungsstift 18 zugewandten Seite des Fixierelements 16 vorgesehen ist.

Ferner wird das Fixierelement 16 durch einen Aktuator 20, beispielsweise eine Druckfeder, mit einer Druckkraft beaufschlagt, die das Fixierelement 16 entlang der Achse R₁ aus dem Futterkörper 4 herausdrückt. Bei nicht eingesetztem Werkzeug 5 wird das Fixierelement 16 soweit herausgedrückt, bis der Sicherungsstift 18 das Fixierelement 16 durch Anliegen oder Anschlagen an einer Wandung der Sicherungsaussparung 19 blockiert. Entsprechend kann das Fixierelement 16 beispielsweise durch Fingerdruck in Richtung auf den Aktuator 20 zu und entgegen der Druckkraft des Aktuators bewegt werden, bis der Sicherungsstift 18 das Fixierelement 16 durch Anschlagen an einer der ersten Wandung gegenüberliegenden zweiten Wandung der Sicherungsaussparung 19 blockiert.

Das Werkzeug 5 und der Futterkörper 4 sind dabei folgendermaßen aufeinander abgestimmt ausgebildet. Ist das Werkzeug 5 in den Futterkörper 4 eingesteckt, so ist die Aussparung 14 des Werkzeugs 5 innerhalb des Futterkörpers 4 angeordnet und ist innerhalb der Durchgangsöffnung 17 des Fixierelements 16 positioniert.

FIG 3b zeigt dabei das isolierte Fixierelement 16 und die genaue Form der Durchgangsöffnung 17 in einer ersten Ausführungsform. Die Durchgangsöffnung 17 ist dabei nicht kreisförmig, sondern ovalartig geformt. Das Fixierelement 16 weist Führungsbereiche 26a, 26b auf, die mit nicht dargestellten Führungen des Futterkörpers 4 zusammenwirken und eine möglichst reibungsarme und gleitende Bewegung des Fixierelements 16 entlang der radialen Achse R₁ ermöglichen.

Die Durchgangsöffnung 17 weist eine Kontur 27 auf, mit einem ersten Konturabschnitt 27a, einem zweiten Konturabschnitt 27b und einem dritten Konturabschnitt 27c. Der dritte Konturabschnitt 27c ist dabei als nahezu halbkreisförmige Kante der Durchgangsöffnung 17 ausgebildet und ist auf der von dem Aktuator 20 abgewandten Seite des Fixierelements 16 vorgesehen. Der erste Konturabschnitt 27a ist als teilkreisförmig ausgebildete Kante der Durchgangsöffnung 17 vorgesehen und auf der dem Aktuator 20 zugewandten Seite und dem Aktuator benachbart angeordnet. Der zweite Konturabschnitt 27b weist zumindest abschnittsweise geraden Kanten der Durchgangsöffnung 17 auf und verbindet den ersten mit dem dritten Konturabschnitt zu einer geschlossenen Kontur 27. Dadurch ergibt sich eine Durchgangsöffnung mit einem breiten Ende, das auf der von dem Aktuator 20 abwandten Seite des Fixierelements 16 angeordnet ist und mit einem weniger breiten Ende oder spitzen Ende oder schmalen Ende, das auf der dem Aktuator zugewandten Seite angeordnet ist. Das breite Ende definiert dabei ein maximale Öffnungsweite OWₘₐₓ, die breiter ist, als der Durchmesser des Werkzeugschafts 15. Das weniger breite Ende, insbesondere der erste Konturabschnitt 27a definiert dabei eine anliegende Öffnungsweite OW_{Schaft}, die dem Durchmesser des Werkzeugschafts 15 im Bereich der Aussparung 14 entspricht. Die anliegende Öffnungsweite OW_{Schaft} ist insbesondere definiert durch die Übergänge von erstem Konturabschnitt 27a zu dem zweiten Konturabschnitt 27b, jeweils an beiden Seiten des ersten Konturabschnitts 27a.

Der Aktuator 20 ist dabei so angeordnet, dass er das Fixierelement 16 bei ordnungsgemäß eingestecktem Werkzeug 5 im Bereich der Aussparung 14 gegen den Werkzeugschaft 15 drückt. Dadurch wird zugleich der Werkzeugschaft 15 mit einem Teil des zylinderstabförmigen Bereichs 23 außerhalb der Aussparung 14 gegen eine Innenwandung einer Werkzeugaufnahme des Futterkörpers 4 gedrückt. Infolgedessen ist der Werkzeugschaft 15 zwischen Fixierelement 16 und einer in axialer Richtung zur Aussparung 1 benachbarten Innenwandung der Werkzeugaufnahme des Futterkörpers 4 geklemmt.

Wird dabei das Fixierelement 16 nicht betätigt, so drückt der Aktuator 20 das Fixierelement entlang der Achse R₁ heraus, so dass das spitze Ende der ovalartigen Durchgangsöffnung 17 auf die Längsachse A zu bewegt wird, wobei das spitze Ende der Durchgangsöffnung 17 so an die Aussparung 14 angepasst sein kann, dass das Werkzeug 5 mit seinem stabförmigen oder zylinderstabförmigen Schaft 15 an einer Wandung des Fixierelements 16 im Bereich der Aussparung 14 flächig anliegt.

Genauer gesagt wird das Fixierelement 16 so gegen den Werkzeugschaft 15 gedrückt, dass eine Wandung der Durchgangsöffnung 17 in einem Bereich eines spitzen Endes der ovalartigen Durchgangsöffnung 17 gegen den Werkzeugschaft 15 drückt. Das Werkzeug 5 wird auf diese Weise in radialer Richtung entlang der Achse R₁ geklemmt und zugleich mit einem Formschluss zwischen Fixierelement und von der Aussparung 14 am Werkzeugschaft 15 gebildeten Stufen oder Absätzen in axialer Richtung sowohl in Vorschubrichtung als auch in Ausziehrichtung arretiert.

Zum Lösen des Werkzeugs 5 aus dem Futterkörper 4 kann das Fixierelement 16 manuell oder mit einem Rüstwerkzeug in Richtung auf den Aktuator 20 gedrückt, bis das Werkzeug 5 durch die Durchgangsöffnung 17 entfernt werden kann. Zu diesem Zweck ist das Fixierelement 16 so dimensioniert, dass es in einer Fixierstellung bei eingestecktem Werkzeug 5 mit einem Signalbereich 25 radial über einen Außenumfang des Futterkörpers 4 hinausragt und so einen haptisch wahrnehmbaren Betätigungspunkt formt, der beispielsweise vom Finger eines Bedieners eingedrückt werden kann, wodurch das Fixierelement 16 aus der Fixierstellung in die Offenstellung gebracht und die Arretierung des Werkzeugs 5 gelöst wird. Der Signalbereich 25 weist dabei ein Länge L auf, die einer Länge L entspricht um die das Fixierelement 16 vollständig in den Futterkörper 4 hineingedrückt werden kann. Wenn das Werkzeug 5 nicht ordnungsgemäß in dem Futterkörper 4 angeordnet und/oder befestigt ist, also sich die Aussparung 14 nicht im Bereich des Fixierelements 16 befindet, so ist eine Außenfläche des Signalbereichs 25 bündig mit einer Außenfläche des Futterkörpers 4. Sobald das Werkzeug 5 in eine ordnungsgemäße Position gebracht ist, rastet das Fixierelement 16 in die Aussparung 14 ein und der Signalbereich 25 ragt über die Außenfläche des Futterkörpers 4 hinaus. Auf diese Weise "signalisiert" der Signalbereich einem Bediener die ordnungsgemäße und eine eben nicht ordnungsgemäße Position des Werkzeugs 5 in dem Futterkörper 4.

Durch das Bewegen des Fixierelements 16 in Richtung auf den Aktuator 20 wird das stumpfe Ende der Durchgangsöffnung 17 in Richtung auf die Längsachse A bewegt, so dass ein ausreichend großer Bereich der Durchgangsöffnung 17 bezogen auf die Längsachse A zentrisch zur Längsachse A angeordnet wird, beispielsweise der Bereich mit der maximalen Öffnungsweite OWₘₐₓ. Weist der zentrisch um die Längsachse A herum angeordnete Bereich der Durchgangsöffnung 17 eine größere Fläche auf als die Querschnittsfläche des Werkzeugschafts 15, so kann der Werkzeugschaft 15 durch die Durchgangsöffnung 17 durchgeführt und aus dieser herausgezogen werden.

Wird das Werkzeugspannfutter an einer Werkzeugmaschine rotierend betrieben, so rotieren die Komponenten Futterkörper 4, Fixierelement 16 und Werkzeug 5 um die Längsachse A. In der in FIG 3a gezeigten Konfiguration ist das Fixierelement 16 exzentrisch bezogen auf die Längsachse A angeordnet. Genauer gesagt liegt der Massenmittelpunkt oder Schwerpunkt des Fixierelements 16 nicht auf der Längsachse A. Aus diesem Grund wird das Fixierelement 16 bei Rotation im Betrieb aufgrund der auf das Fixierelement 16 wirkenden Fliehkräfte radial nach außen bewegt, sodass zusätzlich zu der auf das Fixierelement 16 wirkenden Kraft des Aktuators 20 eine definierte Fliehkraft zur Fixierung des Werkzeugs 15 beträgt. Diese Wirkungsweise bewirkt einen selbstsichernden Effekt des Fixierelements 16, da dieses im Betrieb auch unabhängig von dem Aktuator 20 stets dazu tendiert, sich entgegen der Öffnungsrichtung des Fixierelements 16 radial nach außen in die Einrast- oder Fixierposition zu drängen oder zu bewegen.

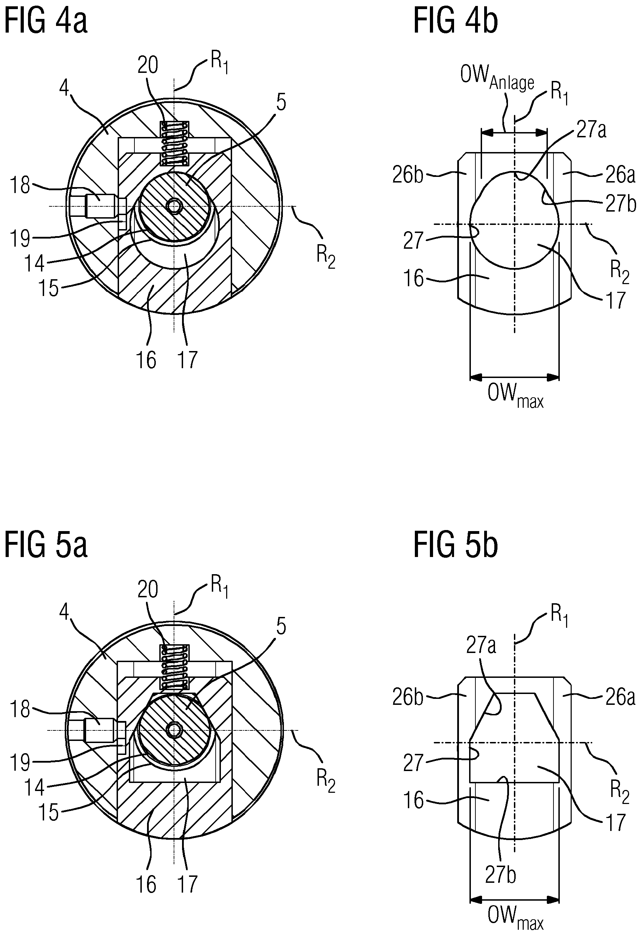

FIG 4a und FIG 4b zeigen eine nicht erfindungsgemäße zweite Ausführungsform eines Fixierelements 16.

Das Fixierelement gemäß der zweiten Ausführungsform unterscheidet sich von dem der ersten Ausführungsform ausschließlich in der Form der Durchgangsöffnung 17, alle weiteren Merkmale stimmen überein. Die Durchgangsöffnung 17 weist eine Kontur 27 auf, die eine sogenannte Schlüssellochform aufweist. Dazu umfasst die Kontur einen zweiten Konturabschnitt 27b, der ein breites Ende der Durchgangsöffnung definiert und einen ersten Konturabschnitt 27a, der ein weniger breites Ende der Durchgangsöffnung 17 definiert. Entsprechend zu der ersten Ausführungsform ist der erste Konturabschnitt 27a benachbart zu dem Aktuator 20 angeordnet und der zweite Konturabschnitt 28b auf der von dem Aktuator 20 abgewandten Seite der Durchgangsöffnung 17. Der erste Konturabschnitt 27a umfasst einen in etwa zwischen viertelkreis- und halbkreisförmig ausgebildeten Kantenabschnitt der Durchgangsöffnung 17, wohingegen der zweite Konturabschnitt 27b einen etwas größer als halbkreisförmig ausgebildeten Kantenabschnitt der Durchgangsöffnung 17 umfasst. Dabei ist der Radius des Kantenabschnitts des zweiten Konturabschnitts 27b größer als der Radius des Kantenabschnitts des ersten Konturabschnitts 27a. Der Radius des größer als halbkreisförmig ausgebildeten Kantenabschnitts des zweiten Konturabschnitts 27b definiert dabei die maximale Öffnungsweite OWₘₐₓ. Die Übergänge zwischen erstem und zweitem Konturabschnitt definieren die anliegende Öffnungsweite OW_{Schaft}. Der Radius des ersten Konturabschnitts 27a ist dabei identisch mit dem Radius des Werkzeugschafts 15 im Bereich der Aussparung 14. Auf diese Weise kann eine möglichst große Anlagefläche des Fixierelements 16 am Werkzeugschaft 15 erreicht werden.

FIG 5a und FIG 5b zeigen eine dritte Ausführungsform eines Fixierelements 16. Auch das Fixierelement gemäß der dritten Ausführungsform unterscheidet sich von dem der ersten und zweiten Ausführungsform ausschließlich in der Form der Durchgangsöffnung 17, alle weiteren Merkmale stimmen überein. Die Durchgangsöffnung 17 weist eine Kontur 27 mit einem ersten Konturabschnitt 27a und einem zweiten Konturabschnitt 27b auf, wobei der erste Konturabschnitt 27a auf der dem Aktuator 20 zugewandten Seite der Durchgangsöffnung 17 und der zweite Konturabschnitt 27b auf von dem Aktuator 20 abgewandten Seite der Durchgangsöffnung 17 angeordnet ist. Der erste Konturabschnitt 27a umfasst Kanten der Durchgangsöffnung, die drei Seiten eines Trapezes, in dem dargestellten Fall drei Seiten eines gleichseitigen Trapezes, ausbilden, wobei die Basis des Trapezes in FIG 5b auf der radialen Achse R₂ liegt. Der zweite Konturabschnitt 27b umfasst an die Kanten des ersten Konturabschnittes 27a angrenzend Kanten der Durchgangsöffnung 17, die drei Seiten eines Rechtecks ausbilden, wobei eine Längsseite des Rechtecks in FIG 5b auf der radialen Achse R₂ liegt und mit der Basis des Trapezes des ersten Konturabschnitts 27a zusammenfällt. Die Länge der Längsseite des Rechtecks, beziehungsweise die Länge der Basis des Trapezes definiert die maximale Öffnungsweite OWₘₐₓ.

Die Trapezform des ersten Konturabschnitts 27a ist auf den Durchmesser des zylinderförmigen Werkzeugschafts 15 im Bereich der Aussparung 14 abgestimmt. Dadurch können die beiden gleichseitigen Schenkel und die der Basis gegenüberliegende Grundseite des Trapezes in der Aussparung 14 an dem Werkzeugschaft 15 anliegen. Somit ist eine Drei-Punkt-Anlage des Fixierelements 16 an dem Werkzeugschaft 15 realisiert. Es ist ebenfalls möglich, den Werkzeugschaft 15 im Bereich der Aussparung 14 nicht zylinderförmig auszubilden, sondern mit einem teilweise dreieckförmigen oder trapezförmigen Querschnitt, insbesondere so, dass der Querschnitt des Werkzeugschafts im Bereich der Aussparung der Form der Durchgangsöffnung 17 im Bereich des ersten Konturabschnitts 27a entspricht. Beispielsweise kann der Querschnitt des Werkzeugschafts dieselbe Trapezform aufweisen wie der erste Konturabschnitt 27a. Auf diese Weise kann die Anlagelinie oder Anlagefläche des ersten Konturabschnitts 27a an dem Werkzeugschaft 15 vergrößert werden.

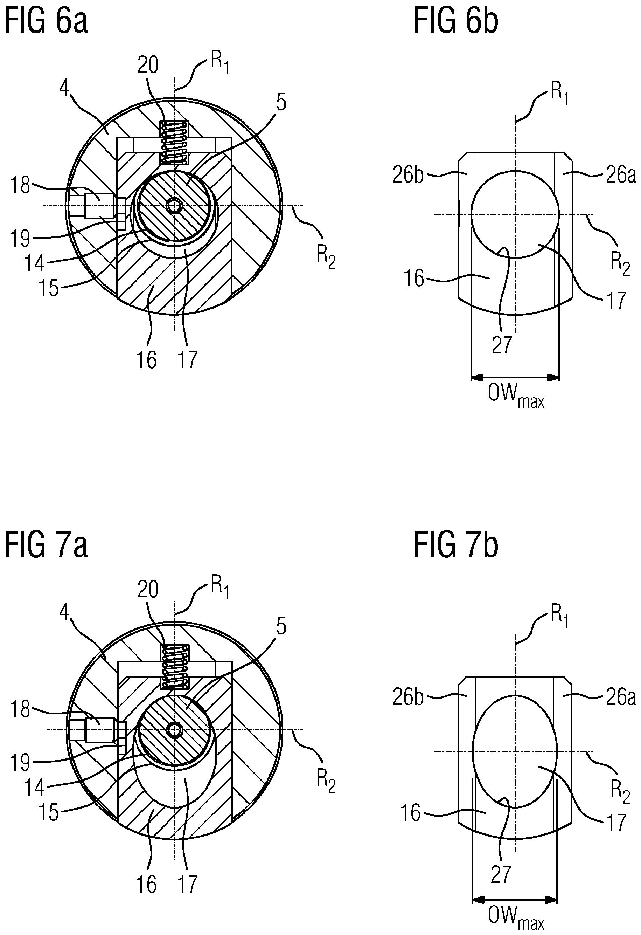

FIG 6a und FIG 6b zeigen eine nicht erfindungsgemäße vierte Ausführungsform eines Fixierelements 16. Auch im Fall der vierten Ausführungsform unterscheidet sich das Fixierelement 16 von dem der ersten, zweiten und dritten Ausführungsform nur in der Form der Durchgangsöffnung 17. Die Durchgangsöffnung in der vierten Ausführungsform ist mit einer kreisrunden Kontur ausgebildet. Der Durchmesser des Kreises entspricht der maximalen Öffnungsweite OWₘₐₓ. Eine kreisförmige Durchgangsöffnung 17 ist in sehr einfacher Weise herstellbar.

FIG 7a und FIG 7b zeigen eine fünfte Ausführungsform eines Fixierelements 16. Wie in den vorherbeschriebenen Fällen unterscheidet sich dies Ausführungsform ebenfalls nur durch die Form der Durchgangsöffnung 17. Die Durchgangsöffnung 17 in der fünften Ausführungsform ist mit einer ellipsenförmigen Kontur 27 ausgebildet, wobei die Längserstreckung der Durchgangsöffnung 17 entlang der radialen Achse R₁ angeordnet ist und die Quererstreckung oder Breite der Durchgangsöffnung sich entlang der radialen Achse R₂ erstreckt. Die Breite der ellipsenförmigen Kontur 27 definiert die maximale Öffnungsweite OWₘₐₓ. Die elliptische Kontur 27 kann in ihrem für die Anlage an dem Werkzeugschaft 15 vorgesehenen Bereich an den Durchmesser des Werkzeugschafts 15 im Bereich der Aussparung 14 angepasst sein.

### Bezugszeichenliste

- 1: Werkzeugspannfutter
- 2: Futterschaft
- 3: Schaftkörper
- 4: Futterkörper
- 5: Werkzeug
- 6: Vierkant
- 7a, 7b: Halteelement
- 8: Abdeckhülse
- 9: Übergaberohr
- 10a, 10b, 10c, 10d: Drehmomentmitnehmer
- 11: Passring
- 12a, 12b: Kompensationselement
- 13: Dichtelement
- 14: Aussparung
- 15: Werkzeugschaft
- 16: Fixierelement
- 17: Durchgangsöffnung
- 18: Sicherungsstift
- 19: Sicherungsaussparung
- 20: Aktuator
- 21: Werkzeugaufnahmedichtung
- 22: Kanal
- 23: Schaftbereich
- 24: Schneidenbereich
- 25: Signalbereich
- 26a, 26b: Führungsbereiche
- 27: Kontur
- 27a, 27b, 27c: erster, zweiter, dritter Konturabschnitt
- A: Längsachse
- R₁, R₂: Radiale Achsen
- L: Länge
- OWₘₐₓ: maximale Öffnungsweite
- OW_{Anlage}: anliegende Öffnungsweite
- F₂₀: Federkraft
- F_{Flieh}: Fliehkraft

## Patentansprüche

1. Spannfutter (1) zur Einspannung eines Werkzeugs (5), insbesondere eines spanenden Werkzeugs, vorzugsweise eines Gewindeschneidwerkzeugs, mit einer Längsachse (A) sowie auf die Längsachse (A) bezogenen radialen Achsen (R₁, R₂), aufweisend einen Futterkörper (4) zur Aufnahme und Fixierung des Werkzeugs (5) in dem Spannfutter (1), wobei der Futterkörper (4) einen Innenraum aufweist, in den das Werkzeug (5) einsteckbar ist und wobei an dem Futterkörper (4) eine Fixiereinrichtung angeordnet ist, mit der ein eingestecktes Werkzeug (5) in dem Futterkörper (4) fixiert werden kann,
wobei die Fixiereinrichtung ein Fixierelement (16) umfasst, das zwischen einer Fixierstellung, in der ein eingestecktes Werkzeug (5) von dem Fixierelement (16) zumindest in axialer Richtung fixiert ist und einer Offenstellung, in der ein Werkzeug (5) in axialer Richtung in den Futterkörper (4) eingesteckt oder aus dem Futterkörper (4) entfernt werden kann, hin und her bewegbar ist, wobei das Fixierelement (16) so an dem Futterkörper (4) angeordnet ist, dass bei einer Rotation des Futterkörpers (4) um die Längsachse (A) eine Fliehkraft (F_{Flieh}) auftritt, die das Fixierelement (16) in die Fixierstellung drückt oder drängt,
wobei
das Fixierelement (16) eine Durchgangsöffnung (17) aufweist und das Fixierelement (16) in dem Innenraum des Futterkörpers (4) so angeordnet ist, dass die Längsachse (A) durch die Durchgangsöffnung (17) hindurch verläuft und dass ein in den Futterkörper (4) eingestecktes und sich durch die Durchgangsöffnung (17) hindurch erstreckendes Werkzeug (5) mittels einer Verschiebung des Fixierelements (16) fixiert werden kann,
**dadurch gekennzeichnet, dass**
die Durchgangsöffnung (17) eine ellipsenförmige Durchgangsöffnung (17) ist oder
dass die Durchgangsöffnung (17) eine ovalartige Durchgangsöffnung (17) ist oder eine Durchgangsöffnung (17) ist, die, vorzugsweise teilweise, eine Trapezform beschreibt.

2. Spannfutter (1) nach Anspruch 1, **dadurch gekennzeichnet, dass** das Fixierelement (16) einen Massenmittelpunkt und/oder einen geometrischen Schwerpunkt aufweist, der zumindest in der Fixierstellung nicht auf der Längsachse (A) angeordnet ist oder der zu der Längsachse (A) beabstandet ist.

3. Spannfutter (1) nach einem der vorhergehenden Ansprüche, **dadurch gekennzeichnet, dass** das Fixierelement (16) zumindest in der Fixierstellung eine exzentrische Massenverteilung bezogen auf die Längsachse (A) aufweist.

4. Spannfutter nach einem der vorhergehenden Ansprüche, **dadurch gekennzeichnet, dass** das Fixierelement (16) und/oder die Durchgangsöffnung (17) wahlweise in einer Fixierstellung zur Fixierung des Werkzeugs (5) oder in einer Offenstellung zur Einführung und/oder Entnahme des Werkzeugs (5) anordenbar oder angeordnet ist.

5. Spannfutter nach einem der vorhergehenden Ansprüche, **dadurch gekennzeichnet, dass** das Fixierelement (16) und/oder die Durchgangsöffnung (17) zwischen Fixierstellung und Offenstellung hin und her bewegbar ist oder bewegt wird
oder
dass das Fixierelement (16) unmittelbar manuell oder von Hand betätigbar und manuell oder von Hand zwischen Fixierstellung und Offenstellung hin und her bewegbar ist.

6. Spannfutter (1) nach einem der vorhergehenden Ansprüche, **dadurch gekennzeichnet, dass** das Fixierelement (16) quer zu Längsachse (A), insbesondere hin und her und/oder linear, bewegbar ist oder bewegt wird und/oder dass das Fixierelement (16) entlang einer radialen Achse (R₁), insbesondere hin und her und/oder linear, bewegbar ist oder bewegt wird.

7. Spannfutter (1) nach einem der vorhergehenden Ansprüche, **dadurch gekennzeichnet, dass** die Fixiereinrichtung einen Aktuator (20), insbesondere eine Druckfeder, aufweist, der das Fixierelement (16) in einer Richtung, insbesondere in einer seiner Bewegungsrichtungen entlang der radialen Achse (R₁), mit einer Aktuatorkraft, vorzugsweise einer Aktuator-Druckkraft oder Federkraft (F₂₀) beaufschlagt, vorzugsweise so, dass das Fixierelement (16) permanent in die Fixierstellung gedrückt wird und/oder gegen einen sich durch die Durchgangsöffnung (17) erstreckenden Werkzeugschaft (15) gedrückt wird.

8. Spannfutter (1) nach Anspruch 7, **dadurch gekennzeichnet, dass** eine Richtung der auf das Fixierelement (16) wirkenden Fliehkraft (F_{Flieh}) und eine Richtung der durch den Aktuator (20) auf das Fixierelement (16) wirkenden Aktuatorkraft, und insbesondere mit der Richtung einer radialen Achse (R₁), übereinstimmen, insbesondere so, dass sich der Betrag der Fliehkraft (F_{Flieh}) und der Betrag der Aktuatorkraft bezogen auf diese Richtung aufaddieren, so dass Fliehkraft (F_{Flieh}) und Druckkraft (F_{Druck}) gemeinsam zu einer Fixierung des Fixierelements (16) in der Fixierstellung beitragen.

9. Spannfutter (1) nach einem der vorhergehenden Ansprüche, **dadurch gekennzeichnet, dass** die Fixiervorrichtung einen, insbesondere als Gewindestift oder Spiralspannstift ausgebildeten, Sicherungsstift (18) aufweist, der in einer Bohrung an dem Futterkörper (4) aufgenommen ist und in eine Sicherungsaussparung (19) an dem Fixierelement (16) ragt, wobei die Sicherungsaussparung (19) eine Längserstreckung entlang der Bewegungsrichtungen, insbesondere entlang der radialen Achse (R₁), des Fixierelements (16) aufweist, die gestattet, dass das Fixierelement (16) entlang der Bewegungsrichtungen hin und her bewegbar ist und dabei einen Anschlag für die Hin-Bewegung und/oder die Her-Bewegung des Fixierelements (16) ausbildet, insbesondere wobei der Sicherungsstift (18) in seiner Längserstreckung entlang einer zweiten radialen Achse (R₂) angeordnet ist, die in einem Winkel, insbesondere quer, zu einer ersten radialen Achse (R₁) angeordnet ist.

10. Spannfutter (1) nach einem der vorhergehenden Ansprüche, **dadurch gekennzeichnet, dass** eine ovalartige Durchgangsöffnung (17) eine Kontur (27) mit wenigstens einem ersten Konturabschnitt (27a) und einem weiteren Konturabschnitt (27c) aufweist, wobei der erste Konturabschnitt (27a) ein spitzes Ende und der weitere Konturabschnitt (27c) ein stumpfes Ende der ovalartigen Durchgangsöffnung (17) ausbilden, wobei die ovalartige Durchgangsöffnung (17) so in dem Fixierelement (16) orientiert angeordnet ist, dass bei einer Bewegung des Fixierelements (16) in die Fixierstellung das stumpfe Ende von der Längsachse (A) weg bewegt und das spitze Ende auf die Längsachse (A) zu bewegt wird und/oder dass bei einer Bewegung des Fixierelements (16) in die Offenstellung das stumpfe Ende auf die Längsachse (A) zu bewegt und das spitze Ende von der Längsachse (A) weg bewegt wird.

11. Spannfutter (1) nach einem der vorhergehenden Ansprüche, **dadurch gekennzeichnet, dass** ein Werkzeug (5) in dem Futterkörper (4) fixiert ist, wobei das Werkzeug einen im Wesentlichen zylinderstabförmigen Werkzeugschaft (15) mit einer in Umfangsrichtung vollständig umlaufenden Aussparung (14), insbesondere mit einer zum Werkzeugschaft (15) konzentrischen Aussparungswand, aufweist, wobei das Fixierelement (16) in Fixierstellung in die Aussparung (14) eingreift, vorzugsweise wobei die Aussparungswand der Aussparung (14) in dem spitzen Ende der ovalförmigen Durchgangsöffnung (17) mit dem Fixierelement (16) in Anlage ist.

12. Spannfutter (1) nach einem der vorhergehenden Ansprüche, **dadurch gekennzeichnet, dass** das Spannfutter (1) einen Schaftkörper (3) zur Ankopplung des Spannfutters (1) an eine Werkzeugmaschine umfasst, wobei der Futterkörper (4) drehfest und mit axialem Spiel mit dem Schaftkörper (3) verbunden ist und wobei zwischen Schaftkörper (3) und Futterkörper (4) eine Kompensationsvorrichtung, insbesondere umfassend ein oder mehrere Kompensationselement(e) (12a, 12b) und/oder ein oder mehrere Halteelement(e) (7a, 7b), angeordnet ist, die dazu vorgesehen ist im Betrieb des Spannfutters (1) auftretende axiale Kräfte in Richtung der Längsachse (A) zumindest teilweise aufzunehmen oder zu dämpfen.

13. Spannfutter (1) nach einem der vorhergehenden Ansprüche, **dadurch gekennzeichnet, dass** das Spannfutter (1), insbesondere Schaftkörper (3) und/oder Übergaberohr (9) und/oder Futterkörper (4) und/oder Werkzeug (5) wenigstens einen Kanal (22) zur spannfutterinternen Zuführung von Kühl- und/oder Schmierstoff an Kühl- und/oder Schmierstoff-Abgabeöffnungen des Werkzeugs (5) ausbilden.

## Claims

1. Chuck (1) for clamping a tool (5), in particular a cutting tool, preferably a thread-cutting tool, with a longitudinal axis (A) and radial axes (R₁, R₂) related to the longitudinal axis (A), having a chuck body (4) for receiving and fixing the tool (5) in the chuck (1), wherein the chuck body (4) has an interior into which the tool (5) can be inserted and wherein a fixing device is arranged on the chuck body (4), with which an inserted tool (5) can be fixed in the chuck body (4),
wherein the fixing device comprises a fixing element (16) which can be moved back and forth between a fixing position, in which an inserted tool (5) is fixed by the fixing element (16) at least in the axial direction, and an open position, in which a tool (5) can be inserted into the chuck body (4) in the axial direction or removed from the chuck body (4), the fixing element (16) being arranged on the chuck body (4) in such a way that when the chuck body (4) rotates about the longitudinal axis (A), a centrifugal force (F_{Flieh}) occurs which presses or urges the fixing element (16) into the fixing position,
whereby
the fixing element (16) has a through opening (17) and the fixing element (16) is arranged in the interior of the chuck body (4) in such a way that the longitudinal axis (A) extends through the through opening (17) and that a tool (5) inserted into the chuck body (4) and extending through the through opening (17) can be fixed by means of a displacement of the fixing element (16),
**characterised in that**
the through opening (17) is an elliptical through opening (17)
or
that the through opening (17) is an oval-shaped through opening (17) or is a through opening (17) which, preferably partially, describes a trapezoidal shape.

2. Chuck (1) according to claim 1, **characterised in that** the fixing element (16) has a mass centre and/or a geometric centre of gravity which, at least in the fixing position, is not arranged on the longitudinal axis (A) or which is at a distance from the longitudinal axis (A).

3. Chuck (1) according to any of the preceding claims, **characterised in that** the fixing element (16) has, at least in the fixing position, an eccentric mass distribution in relation to the longitudinal axis (A).

4. Chuck according to any of the preceding claims, **characterised in that** the fixing element (16) and/or the through opening (17) can be arranged or is arranged optionally in a fixing position for fixing the tool (5) or in an open position for inserting and/or removing the tool (5).

5. Chuck according to any of the preceding claims, **characterised in that** the fixing element (16) and/or the through opening (17) is or are movable back and forth between the fixing position and the open position
or
**in that** the fixing element (16) can be actuated directly manually or by hand and can be moved back and forth manually or by hand between the fixing position and the open position.

6. Chuck (1) according to any of the preceding claims, **characterised in that** the fixing element (16) can be moved or is moved transversely to the longitudinal axis (A), in particular back and forth and/or linearly, and/or
that the fixing element (16) can be moved or is moved along a radial axis (R₁), in particular back and forth and/or linearly.

7. Chuck (1) according to any of the preceding claims, **characterised in that** the fixing device has an actuator (20), in particular a compression spring, which acts on the fixing element (16) in one direction, in particular in one of its directions of movement along the radial axis (R₁), with an actuator force, preferably an actuator compression force or spring force (F₂₀), preferably such that the fixing element (16) is permanently pressed into the fixing position and/or is pressed against a tool shank (15) extending through the through opening (17).

8. Chuck (1) according to claim 7, **characterised in that** a direction of the centrifugal force (F_{Flieh}) acting on the fixing element (16) and a direction of the actuator force acting on the fixing element (16) by the actuator (20), and in particular with the direction of a radial axis (R₁), coincide, in particular in such a way that the amount of centrifugal force (F_{Flieh}) and the amount of actuator force add up in relation to this direction, so that centrifugal force (F_{Flieh}) and compression force (F_{Druck}) together contribute to fixing the fixing element (16) in the fixing position.

9. Chuck (1) according to any of the preceding claims, **characterised in that** the fixing device has a securing pin (18), in particular in the form of a threaded pin or spiral spring pin, which is received in a bore on the chuck body (4) and projects into a securing recess (19) on the fixing element (16), the securing recess (19) having a longitudinal extension along the directions of movement, in particular along the radial axis (R₁), of the fixing element (16), which allows the fixing element (16) to be moved back and forth along the directions of movement and thereby forms a stop for the outward movement and/or the inward movement of the fixing element (16), in particular wherein the securing pin (18) is arranged in its longitudinal extension along a second radial axis (R₂), which is arranged at an angle, in particular transversely, to a first radial axis (R₁).

10. Chuck (1) according to any of the preceding claims, **characterised in that** an oval-like through opening (17) has a contour (27) with at least a first contour section (27a) and a further contour section (27c), wherein the first contour section (27a) forms a pointed end and the further contour section (27c) forms a blunt end of the oval-like through opening (17), wherein the oval-like through opening (17) is arranged in the fixing element (16) in such an orientated manner that when the fixing element (16) is moved into the fixing position, the blunt end is moved away from the longitudinal axis (A) and the pointed end is moved towards the longitudinal axis (A) and/or that when the fixing element (16) is moved into the open position, the blunt end is moved towards the longitudinal axis (A) and the pointed end is moved away from the longitudinal axis (A).

11. Chuck (1) according to any of the preceding claims, **characterised in that** a tool (5) is fixed in the chuck body (4), the tool having an essentially cylindrical rod-shaped tool shank (15) with a recess (14) running completely around in the circumferential direction, in particular with a recess wall concentric with the tool shank (15), wherein the fixing element (16) engages in the recess (14) in the fixing position, preferably wherein the recess wall of the recess (14) is in contact with the fixing element (16) in the pointed end of the oval-shaped through opening (17).

12. Chuck (1) according to any of the preceding claims, **characterised in that** the chuck (1) comprises a shank body (3) for coupling the chuck (1) to a machine tool, wherein the chuck body (4) is connected to the shank body (3) in a rotationally fixed manner and with axial play and wherein a compensation device is arranged between the shank body (3) and the chuck body (4), in particular comprising one or more compensation element(s) (12a, 12b) and/or one or more retaining element(s) (7a, 7b), which is intended to at least partially absorb or dampen axial forces occurring in the direction of the longitudinal axis (A) during operation of the chuck (1).

13. Chuck (1) according to any of the preceding claims, **characterised in that** the chuck (1), in particular the shank body (3) and/or transfer tube (9) and/or chuck body (4) and/or tool (5) form at least one channel (22) for the chuck-internal supply of coolant and/or lubricant to cooling and/or lubricant discharge openings of the tool (5).

## Revendications

1. Mandrin de serrage (1) pour le serrage d'un outil (5), en particulier d'un outil d'usinage, de préférence d'un outil de taraudage, avec un axe longitudinal (A) ainsi que des axes radiaux (R₁, R₂) rapportés à l'axe longitudinal (A), présentant un corps de mandrin (4) pour le logement et la fixation de l'outil (5) dans le mandrin de serrage (1), le corps de mandrin (4) présentant un espace intérieur dans lequel l'outil (5) peut être enfiché et un dispositif de fixation étant disposé sur le corps de mandrin (4), avec lequel un outil (5) enfiché peut être fixé dans le corps de mandrin (4),
le dispositif de fixation comprenant un élément de fixation (16) qui peut être déplacé entre une position de fixation, dans laquelle un outil (5) inséré est fixé par l'élément de fixation (16) au moins dans la direction axiale, et une position ouverte, dans laquelle un outil (5) peut être inséré dans le corps de mandrin (4) ou retiré du corps de mandrin (4) dans la direction axiale, l'élément de fixation (16) étant disposé sur le corps de mandrin (4) de telle sorte que, lors d'une rotation du corps de mandrin (4) autour de l'axe longitudinal (A), il se produit une force centrifuge (F_{Flieh}) qui pousse ou force l'élément de fixation (16) dans la position de fixation,
où
l'élément de fixation (16) présente une ouverture de passage (17) et l'élément de fixation (16) est disposé dans l'espace intérieur du corps de mandrin (4) de telle sorte que l'axe longitudinal (A) s'étend à travers l'ouverture de passage (17) et qu'un outil (5) inséré dans le corps de mandrin (4) et s'étendant à travers l'ouverture de passage (17) peut être fixé au moyen d'un déplacement de l'élément de fixation (16),
**caractérisé en ce que**
l'ouverture de passage (17) est une ouverture de passage elliptique (17)
ou
**en ce que** l'ouverture de passage (17) est une ouverture de passage (17) de type ovale ou est une ouverture de passage (17) qui décrit, de préférence partiellement, une forme trapézoïdale.

2. Mandrin (1) selon la revendication 1, **caractérisé en ce que** l'élément de fixation (16) présente un centre de masse et/ou un centre de gravité géométrique qui, au moins dans la position de fixation, n'est pas disposé sur l'axe longitudinal (A) ou qui est espacé de l'axe longitudinal (A).

3. Mandrin (1) selon l'une des revendications précédentes, **caractérisé en ce que** l'élément de fixation (16) présente, au moins dans la position de fixation, une répartition de masse excentrée par rapport à l'axe longitudinal (A).

4. Mandrin selon l'une des revendications précédentes, **caractérisé en ce que** l'élément de fixation (16) et/ou l'ouverture de passage (17) peuvent être disposés ou sont disposés au choix dans une position de fixation pour fixer l'outil (5) ou dans une position ouverte pour introduire et/ou retirer l'outil (5).

5. Mandrin selon l'une des revendications précédentes, **caractérisé en ce que** l'élément de fixation (16) et/ou l'ouverture de passage (17) est ou sont déplaçables en va-et-vient entre la position de fixation et la position d'ouverture. ou
**en ce que** l'élément de fixation (16) peut être actionné directement manuellement ou à la main et peut être déplacé en va-et-vient manuellement ou à la main entre la position de fixation et la position d'ouverture.

6. Mandrin (1) selon l'une des revendications précédentes, **caractérisé en ce que** l'élément de fixation (16) peut être déplacé ou est déplacé transversalement à l'axe longitudinal (A), en particulier en va-et-vient et/ou de manière linéaire, et/ou
**en ce que** l'élément de fixation (16) peut être déplacé ou est déplacé le long d'un axe radial (R₁), en particulier en va-et-vient et/ou de manière linéaire.

7. Mandrin (1) selon l'une des revendications précédentes, **caractérisé en ce que** le dispositif de fixation comporte un actionneur (20), notamment un ressort de compression, qui déplace l'élément de fixation (16) dans une direction, notamment dans une de ses directions de déplacement le long de l'axe radial (R₁), avec une force d'actionneur, de préférence une force de pression d'actionneur ou une force de ressort (F₂₀), de préférence de telle sorte que l'élément de fixation (16) est poussé en permanence dans la position de fixation et/ou est pressé contre une tige d'outil (15) s'étendant à travers l'ouverture de passage (17).

8. Mandrin (1) selon la revendication 7, **caractérisé en ce qu'**une direction de la force centrifuge (F_{Flieh}) agissant sur l'élément de fixation (16) et une direction de la force d'actionnement agissant sur l'élément de fixation (16) par l'actionneur (20), et en particulier avec la direction d'un axe radial (R₁), coïncident, notamment de telle sorte que la valeur de la force centrifuge (F_{Flieh}) et la valeur de la force de l'actionneur s'additionnent par rapport à cette direction, de sorte que la force centrifuge (F_{Flieh}) et la force de pression (F_{Druck}) contribuent ensemble à une fixation de l'élément de fixation (16) dans la position de fixation.

9. Mandrin (1) selon l'une quelconque des revendications précédentes, **caractérisé en ce que** le dispositif de fixation comprend une goupille de sécurité (18), en particulier une goupille filetée ou une goupille de serrage en spirale, qui est logée dans un alésage sur le corps de mandrin (4) et qui fait saillie dans un évidement de sécurité (19) sur l'élément de fixation (16), l'évidement de sécurité (19) présentant une extension longitudinale le long des directions de déplacement, en particulier le long de l'axe radial (R₁), de l'élément de fixation (16), qui permet à l'élément de fixation (16) d'être déplacé en va-et-vient le long des directions de déplacement et forme ainsi une butée pour le mouvement de va-et-vient et/ou le mouvement de retour de l'élément de fixation (16), en particulier dans lequel la goupille de sécurité (18) est disposée dans son extension longitudinale le long d'un deuxième axe radial (R₂), qui est disposé selon un angle, en particulier transversalement, par rapport à un premier axe radial (R₁).

10. Mandrin (1) selon l'une des revendications précédentes, **caractérisé en ce qu'**une ouverture de passage de type ovale (17) présente un contour (27) avec au moins une première partie de contour (27a) et une autre partie de contour (27c), la première partie de contour (27a) formant une extrémité pointue et l'autre partie de contour (27c) formant une extrémité émoussée de l'ouverture de passage de type ovale (17), dans lequel l'ouverture traversante de type ovale (17) est orientée dans l'élément de fixation (16) de telle sorte que, lorsque l'élément de fixation (16) est déplacé dans la position de fixation, l'extrémité émoussée est éloignée de l'axe longitudinal (A) et l'extrémité pointue est déplacée vers l'axe longitudinal (A) et/ou que, lorsque l'élément de fixation (16) est déplacé dans la position ouverte, l'extrémité émoussée est déplacée vers l'axe longitudinal (A) et l'extrémité pointue est éloignée de l'axe longitudinal (A).

11. Mandrin (1) selon l'une des revendications précédentes, **caractérisé en ce qu'**un outil (5) est fixé dans le corps de mandrin (4), l'outil comprenant une tige d'outil (15) sensiblement en forme de barre cylindrique avec un évidement (14) s'étendant complètement dans la direction circonférentielle, en particulier avec une paroi d'évidement concentrique à la tige d'outil (15), l'élément de fixation (16) s'engageant dans l'évidement (14) en position de fixation, de préférence la paroi d'évidement de l'évidement (14) étant en contact avec l'élément de fixation (16) dans l'extrémité pointue de l'ouverture de passage (17) de forme ovale.

12. Mandrin (1) selon l'une des revendications précédentes, **caractérisé en ce que** le mandrin (1) comprend un corps de tige (3) pour coupler le mandrin (1) à une machine-outil, le corps de mandrin (4) étant solidaire en rotation et avec un jeu axial du corps de tige (3), et un dispositif de compensation étant interposé entre le corps de tige (3) et le corps de mandrin (4), comprenant notamment un ou plusieurs éléments de compensation (12a, 12b) et/ou un ou plusieurs éléments de retenue (7a, 7b), qui est prévu pour absorber ou amortir au moins partiellement les forces axiales dans la direction de l'axe longitudinal (A) qui apparaissent pendant le fonctionnement du mandrin (1).

13. Mandrin (1) selon l'une des revendications précédentes, **caractérisé en ce que** le mandrin de serrage (1), en particulier le corps de tige (3) et/ou le tube de transfert (9) et/ou le corps de mandrin (4) et/ou l'outil (5), forme au moins un canal (22) pour l'amenée interne au mandrin de serrage de réfrigérant et/ou de lubrifiant à des ouvertures de distribution de réfrigérant et/ou de lubrifiant de l'outil (5).
